# EUROPEAN PATENT APPLICATION

(11) **EP 3 876 050 A1**
(43) Date of publication of application: **08.09.2021**
(21) Application number: 18938971.1
(22) Date of filing: 31.10.2018
(51) Int. Cl.: G05B 19/4097, G05B 19/414

(54) **PROCESSING SUPPORT SYSTEM**

(71) Applicant: Makino Milling Machine Co., Ltd., Tokyo 152-8578 (JP)
(72) Inventor: TSUCHIYA, Yuichiro, Aiko-gun, Kanagawa 243-0303 (JP); TAKEI, Katsuhiko, Tokyo 152-8578 (JP); OGAWA, Takashi, Tokyo 152-8578 (JP); WAKATSUCHI, Koichi, Tokyo 152-8578 (JP)
(74) Representative: McWilliams, David John
(86) International application number: PCT/JP2018/040604
(87) International publication number: WO 2020/090058

(57) **Abstract**

To provide processing information to a CAM (15) that generates an NC program of a processing machine (11) for processing an object to be processed with a tool, a processing support system (3) comprises, in a cloud storage device (51) installed on a processing tool manufacturer side, a user knowledge database (53) of a storage unit that stores processing information so as to be unshareble with other users and a sharing knowledge database (55) of the storage unit that stores processing information so as to be sharable with other user, wherein a user side transmits and receives, by a transmitting/receiving unit (21), extended STEP-NC data of processing information via a network (5).

## Description

### FIELD

The present invention relates to a machining support system which provides an appropriate machining method to a user of a machine tool.

### BACKGROUND

When a workpiece is machined by a machine tool, an NC program and machining conditions are supplied to the machine tool. However, since the NC program of an actual workpiece is complicated, it is difficult to manually create the NC program, and the NC program is generated using CAM

Patent Literature 1 discloses providing a machining examples storage unit in which machining conditions of machining performed in the past are stored as machining examples, and that the machining examples are searched based on shape information from the machining examples storage unit, and machining conditions are determined to control a machining device.

### [CITATION LIST]

### [PATENT LITERATURE]

[PTL 1] Japanese Unexamined Patent Publication (Kokai). No. 2004-284002

### SUMMARY

### [TECHNICAL PROBLEM]

When a workpiece is machined with a machine tool, it is necessary to supply an NC program, tool information of the tool to be used for machining, etc., to the machine tool. The machine tool is controlled in accordance with the procedures described in the NC program created by the CAM to machine the workpiece. The CAM uses the tool information of the machine tool used for machining and the workpiece data created by CAD to generate a tool path, which is the path on which the tool and workpiece move relative to each other on the machine tool, and generates an NC program by adding a tool exchange command, a workpiece exchange command, spindle rotation commands, etc., to the generated tool path.

When an NC program is created, since the shape of the workpiece is carved out, as long as the tool path is set so that the tool passes through the portion desired to be removed from the workpiece, the portions remaining after machining have the desired shape, and it would appear that the same shape can be machined regardless of the tool path. However, in reality, depending on the tool path, the cutting load fluctuates depending on the size of the contact area between the workpiece and the tool, whereby it is not possible to machine into the desired shape due to various factors such as bending of the tool, the machine tool, or the workpiece, thermal expansion due to heat generated by excessive load, and damage to the tool. Alternatively, if the tool path has a margin for the cutting load, the cutting amount is reduced and machining time is lengthened. Thus, it is necessary to generate an appropriate tool path using the CAM. However, since the tool path can have any of infinite patterns, it is necessary to teach the CAM a certain amount of tool path generation rules. There are various rules for generating tool paths, and they are suitable or inappropriate depending on the shape of the workpiece, the type of tool, the material of the workpiece, etc.

Examples of tool path generation rules include contour line pathing, scan line pathing, and planar pathing. In contour line pathing, with reference to the height in the Z-axis direction, which is the rotation axis direction of the tool, the height in the Z-axis direction is maintained constant, and the tool is moved so as to draw contour lines on the surface to be machined. In scan line pathing, the tool is moved so as to scan the surface of the surface to be machined in either the X-axis direction or the Y-axis direction orthogonal to the rotation axis direction of the tool, the tool is moved in the Z-axis direction in accordance with the unevenness of the surface to be machined, and the surface to be machined is machined so as to fill the area while following the surface to be machined. In planar pathing, the boundary line between the surface to be machined and another surface to be machined is used as a reference, and the tool is moved along the boundary line to machine the surface to be machined. In addition to the above three rules, various rules can be considered for tool path generation rules, such as spiral machining in which the tool moves spirally in the height direction along the surface to be machined.

It is necessary that the operator select the tool path generation rules from several tool path generation rules stored in the CAM and input, into the CAM, which tool path generation rules to apply to which part of the workpiece. Which tool path generation rules to apply will be chosen based on the experience the operator has gained through trial and error in the past, depending on the experience of the operator, the most appropriate tool path rule may not be applied, and in addition, it may not be possible to know which tool path generation rules should be selected for a newly shaped workpiece.

Furthermore, in Patent Literature 1, though past data is searched, there is a problem in that it is difficult for each user to improve the machining technology because the opportunity to obtain new knowledge about machining know-how is limited because the data is not shared.

The present invention has been completed in light of the above circumstances, and an object thereof is to provide a machining support system which enables anyone to set an appropriate machining method by deriving an optimum machining method from a large quantity of knowledge using the machining know-how of others.

### [SOLUTION TO PROBLEM]

The present invention provides a machining support system for supplying machining information for generating a machining program of a machine tool for machining a workpiece with a tool based on machining information prepared in advance, the machining support system comprising a transmitting/receiving unit for transmitting and receiving machining information via a network, a first storage unit for storing machining information for each user so as to be non-shareable, and a second storage unit for storing machining information so as to be shareable with other users.

According thereto, it is possible to refer to the machining know-how of others stored in the second storage unit while protecting the machining know-how of the user stored in the first storage unit, and even if a workpiece has features which are unfamiliar to one user, it will be possible for the user to obtain the machining know-how of another user as a reference.

The present invention is further configured such that the machining information includes shape information of the workpiece stored in a format independent of the type of the machine tool, the machining support system further comprising an input unit with which the shape information of the workpiece is input, a search unit which searches for machining information including shape information of a workpiece which is similar to the shape information of the workpiece input from the input unit, and a conversion unit which searches for machining information including information of a similar workpiece from those in the first storage unit and the second storage unit by means of the search unit, and which converts the searched machining information into data which is suitable for the desired machine tool.

According thereto, even for workpieces which are unfamiliar to the user on a specific model of machine tool, similar and helpful machining information is provided, and since each user performs machining, and the machining information is stored in the first storage unit or the second storage unit based on the results of the machining performed, a large amount of new knowledge is accumulated.

The present invention is further configured such that there is provided a third storage unit in which machining information of the machine tool manufacturer side is stored so as to be sharable.

According thereto, even for workpieces which are unfamiliar to the user, the know-how of the manufacturer of the machine tool is further provided, and since each user performs machining, and the machining information is stored in the first storage unit or the second storage unit based on the results of the machining performed, a large amount of new knowledge is accumulated.

### [ADVANTAGEOUS EFFECTS OF INVENTION]

According to the present invention, though it is necessary for each user company to maintain machining know-how which best makes the use of the characteristics of the user to differentiate it from other user companies, by sharing basic machining know-how with low sensitivity with other user companies, new knowledge can be obtained from each other. Thus, when machining a workpiece with unfamiliar features, machining can be easily performed with the machining know-how of other user companies and machine tool manufacturers.

### BRIEF DESCRIPTION OF DRAWINGS

FIG. 1 is a block diagram illustrating the structure of an embodiment of the present invention.
FIG. 2 is a flowchart illustrating an example of an operation procedure using the present invention.

### DESCRIPTION OF EMBODIMENTS

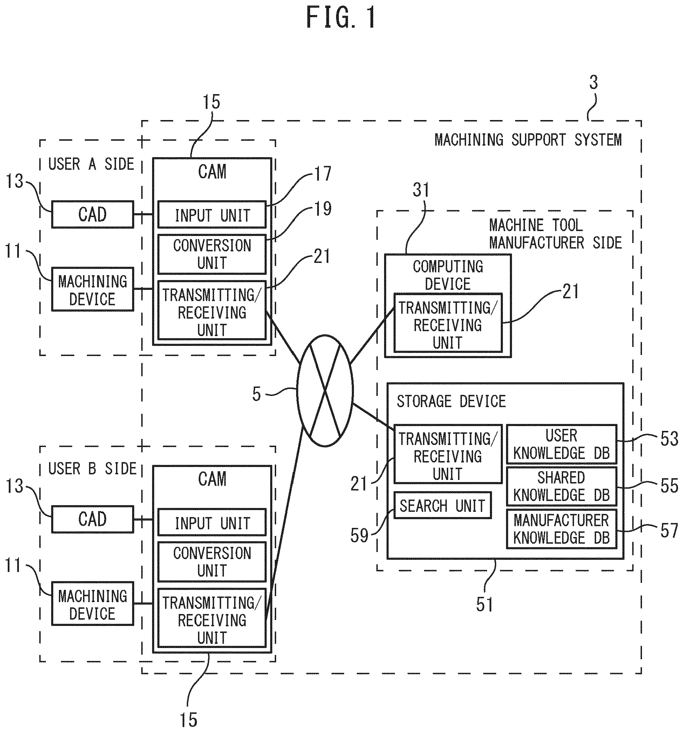

An embodiment of the present invention is shown in FIG. 1. The machining device 11 is a machine tool such as a machining center which cuts a workpiece by moving a rotating tool relative to the workpiece. The machining center comprises a three-axis machine which can translate the tool in the X-, Y-, and Z-axis directions relative to the workpiece, or a five-axis machine which can rotate and move in the A- and C-axis directions in addition to the X-, Y-, and Z-axis directions. In the NC program, the tool path is described as coordinate values of X-, Y-, Z-, A-, and C-axis and the machine tool performs machining by moving X-, Y-, Z-, A-, and C-axis shafts in accordance with commands described in the NC program. Furthermore, the NC program also describes commands for operating a spindle for rotating the tool, an exchange device for the tool used for machining, a coolant supply device, etc., and machining of the workpiece is performed while providing these commands.

A CAD 13 generates workpiece shape data, which is data representing the desired workpiece shape, based on the input from the workpiece designer. The shape data of the workpiece is input to an input unit 17 of a CAM 15.

The CAM 15 acquires the tool data, which is information regarding the tool provided in the machining device 11, and acquires the shape data of the workpiece generated by the CAD 13. The CAM 15 comprises a transmitting/receiving unit 21. The transmitting/receiving unit 21 transmits and receives the shape data and the tool data to and from a computing device 31 via a network 5.

The computing device 31 generates a configuration space (c-space) which is an index representing an interference region between the tool and the workpiece, and returns it to the transmitting/receiving unit 21 of the CAM 15. The computing device 31 is a large-scale computer system and has a higher computing power than the CAM 15. Since the operation of obtaining the interference region between the tool and the workpiece has a large calculation load, it can be calculated in a short time by performing calculation with the computing device 31 instead of the CAM 15.

The CAM 15 can generate an NC program for machining the workpiece into the shape of the shape data input to the input unit 17 by using the c-space in a conversion unit 19, while avoiding interference between tool and workpiece. The created NC program is sent to the machining device 11, and the machining device 11 performs machining of the workpiece.

The CAM 15 generates STEP-NC data, which is data summarizing machining information, which is information of the workpiece or information necessary in machining such as the NC program used in a series of operations, workpiece shape data, tool information, material model, material, and features representing the shape features of holes and grooves. STEP-NC is known as the international standard ISO14649. In the present invention, extended STEP-NC data obtained by adding a three-dimensional machining method to the STEP-NC data is generated. As a method of adding the three-dimensional machining method to the STEP-NC data, a method of storing the data by using the function of the additional information prepared in the STEP-NC standard can be considered. The three-dimensional machining method is information indicating what is used as the tool path generation rules. The generated extended STEP-NC data is sent from the CAM 15 to a cloud storage device 51 on the network 5, and is stored in a user knowledge database 53, which is the first storage unit.

The operator can also store the extended STEP-NC data in the shared knowledge database 55, which is the second storage unit, by setting it on the CAM 15. The extended STEP-NC data stored in the shared knowledge database 55 can also be accessed by other users. To encourage each user to store extended STEP-NC data in the shared knowledge database 55, users who store more extended STEP-NC data in the shared knowledge database 55 can access more data, and the amount of data that can be accessed by users who provide less extended STEP-NC data to the shared knowledge database 55 may be limited.

The extended STEP-NC data can be prepared by the manufacturers of the machining devices 11 for users using the products of the company. The extended STEP-NC data prepared by these manufacturers is stored in the manufacturer knowledge database 57, which is a third storage unit. The manufacturer knowledge database 57 is set so that any user of the machining device 11 can access it. The user knowledge database 53, the shared knowledge database 55, and the manufacturer knowledge database 57 may be configured separately from each other in terms of hardware, or may be configured separately from each other in terms of software on a single piece of hardware.

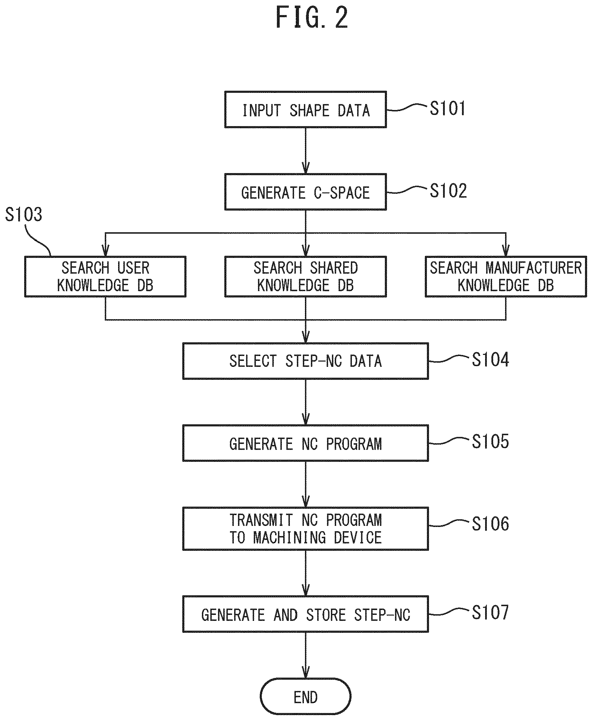

The actual procedure will be described in accordance with the flowchart of FIG. 2. The user creates post-machining shape data of the workpiece to be produced with the CAD 13. Next, the user inputs the shape data of the workpiece created with the CAD 13 and tool information of the machining device 11 used for machining into the CAM 15 (S101). Next, the user transmits the shape data of the tool and the shape data of the workpiece from the CAM 15 to the computing device 31, and acquires the c-space data calculated and generated by the computing device 31 in the CAM 15 (S102). Next, the user transmits the shape data of the workpiece from the CAM 15 to the cloud storage device 51, and searches the user knowledge database 53 with the search unit 59 for the data of another workpiece having a high degree of similarity to the transmitted workpiece (S103). If there is no highly similar data in the user knowledge database 53, the search unit 59 may search the shared knowledge database 55 or the manufacturer knowledge database 57. The user selects the extended STEP-NC data in which the shape data of the workpiece having a high degree of similarity is stored from the search result, and acquires the extended STEP-NC data from the storage device 51 to the CAM 15 (S104). In the CAM 15, the user generates an NC program using the shape data of the workpiece to be produced, the data of the tool, and the data of the c-space (S105). For machining information which is insufficient for NC program generation, such as tool path generation rules, information in similar extended STEP-NC data is used. The user transmits the NC program from the CAM 15 to the machining device 11 (S106). The machining device 11 performs machining in accordance with commands described in the received NC program. The user generates extended STEP-NC data based on the current machining information and stores it in the user knowledge database 53 (S107). If it may be shared, the extended STEP-NC data is also stored in the shared knowledge database 55.

According to the present invention, machining know-how based on past machining results is accumulated for each user in the user knowledge database. Furthermore, by sharing the machining know-how with other user companies in the shared knowledge database, new knowledge can be obtained from each other. Thus, even for workers having no machining experience, reference can be made to in-house machining know-how and the machining know-how of other user companies, whereby the machining know-how can be easily reproduced.

Though the computing device 31 and the storage device 51 have been described as cloud storage prepared by the machine tool manufacturer side in the present embodiment, a computer system in the machine tool manufacturer may be used. It is desirable to form an alliance between each machine tool user and the machine tool manufacturer to expand the shared knowledge database 55.

Though an embodiment in which the user knowledge database 53 is in the storage device 51 on the machine tool manufacturer side has been described, it may be in a storage device on the machine tool user side. In this case, the search unit searches the data via the network 5. The machine tool manufacturer side refers to companies which provide technologies used in machine tools such as machine tool production companies, machine tool sales companies, companies which develop machine tool machining technology, machine tool parts companies, tool companies, and measuring instrument companies.

### REFERENCE SIGNS LIST

- 3: Machining Support System
- 5: Network
- 15: CAM
- 17: Input Unit
- 19: Conversion Unit
- 21: Transmitting/Receiving Unit
- 31: Computing Device
- 51: Storage Device
- 53: User Knowledge Database
- 55: Shared Knowledge Database
- 57: Manufacturer Knowledge Database
- 59: Search Unit

## Claims

1. A machining support system which is constituted on both a machine tool user side and a machine tool manufacturing side and in which machining information is supplied from the both sides so as to generate a machining program of a machine tool for machining a workpiece with a tool based on machining information prepared in advance, the machining support system comprising:
a transmitting/receiving unit for transmitting and receiving machining information between the machine tool user side and the machine tool manufacturer side via a network,
a first storage unit for storing the machining information for each user so as to be non-shareable, and
a second storage unit for storing the machining information so as to be shareable with other users.

2. The machining support system according to claim 1, wherein
the machining information includes shape information of the workpiece stored in a format independent of the type of the machine tool, the machining support system further comprising:
an input unit with which the shape information of the workpiece is input,
a search unit which searches for machining information including shape information of a workpiece which is similar to the shape information of the workpiece input from the input unit, and
a conversion unit which searches for machining information including information of a similar workpiece from those in the first storage unit and the second storage unit by means of the search unit, and which converts the searched machining information into data which is suitable for the desired machine tool.

3. The machining support system according to claim 1 or 2, further comprising:
a third storage unit in which the machining information of the machine tool manufacturer side is stored so as to be sharable.
